(19) Europäisches Patentamt
European Patent Office
Office européen des brevets

(11) EP 1 682 641 B1

# (12) EUROPEAN PATENT SPECIFICATION

(45) Date of publication and mention of the grant of the patent:
**27.06.2007 Bulletin 2007/26**

(21) Application number: **04798784.7**

(22) Date of filing: **03.11.2004**

(51) Int Cl.:
***C11B 9/00*** *(2006.01)* ***A23L 1/226*** *(2006.01)*

(86) International application number:
**PCT/IB2004/003629**

(87) International publication number:
**WO 2005/042680 (12.05.2005 Gazette 2005/19)**

## (54) FLAVOR INGREDIENTS FOR COOLING PREPARATIONS

GESCHMACKSZUTATEN FÜR KÜHLENDE ZUBEREITUNGEN

INGREDIENTS PARFUMANTS POUR PREPARATIONS DE REFROIDISSEMENT

(84) Designated Contracting States:
**AT BE BG CH CY CZ DE DK EE ES FI FR GB GR HU IE IS IT LI LU MC NL PL PT RO SE SI SK TR**

(30) Priority: **04.11.2003 WOPCT/IB03/04968**

(43) Date of publication of application:
**26.07.2006 Bulletin 2006/30**

(73) Proprietor: **FIRMENICH SA**
**1211 Genève 8 (CH)**

(72) Inventors:
- **GIERSCH, Wolfgang Klaus**
  **CH-1233 BERNEX (CH)**
- **VANRIETVELDE, Claude**
  **F-74160 ST-JULIEN-EN-GENEVOIS (FR)**
- **LE, Anh**
  **CH-1217 GENEVA (CH)**
- **BARRA, Jérôme**
  **F-74160 NEYDENS (FR)**
- **TASHIRO, Hidemi**
  **CH-1206 GENEVA (CH)**

(74) Representative: **Salvaterra-Garcia, Maria de Lurdes et al**
**Firmenich SA,**
**1, route des Jeunes,**
**P.O. Box 239**
**1211 Geneva 8 (CH)**

(56) References cited:
**EP-A- 0 485 170** **US-A- 5 057 239**

- **PEARSON W. H.; CHENG M-C.: "Synthesis of 1,3-Dioxloan-4-ones. An Improved Procedure" JOURNAL OF ORGANIC CHEMISTRY, vol. 52, 1987, pages 1353-1355, XP008043845 cited in the application**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 682 641 B1

## Description

### Technical field

The present invention relates to the field of perfumery and flavor. More particularly, it concerns the use of a compound of formula

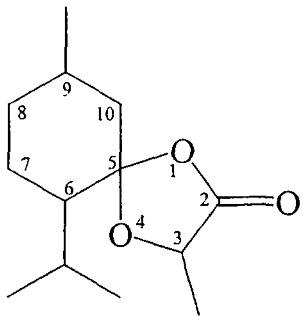

(I)

in the form of any one of its isomers or of a mixture thereof, as a perfuming or flavoring ingredient. The present invention concerns also the compositions or articles containing said compound.

### Prior art

W.H.Pearson et al., in J.Org.Chem. 1987, 52, 1355, have reported the synthesis of the compound of formula (I) in the form of an isomers mixture containing (3R,5S,6S,9R)-6-isopropyl-3,9-dimethyl-1,4-dioxaspiro[4.5]decan-2-one as major component.

However, said document mentions the compound of formula (I) as a simple reaction product and does not mention or suggest any organoleptic properties or any use of the latter in the field of flavors or perfumery.

US Patent 5,057,239 describes the use of spiranic lactones as fragrance ingredients. EP-A-485170 describes flavoring agents comprising a menthone ketal.

### Description of the invention

We have now discovered that a compound of formula

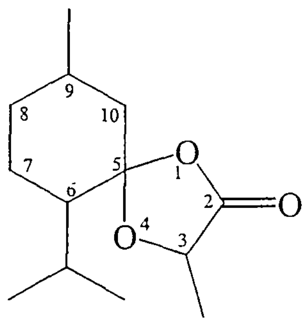

(I)

is a useful perfuming or flavoring ingredient, which is unexpectedly characterized by organoleptic properties of the mint or minty-fresh type.

The compound of formula (I) possesses four asymmetric carbon atoms, namely atoms 3, 5, 6 and 9. Therefore, the compound of formula (I) can be in the form of anyone of its stereoisomers. Non-limiting examples of which are (3S, 5R,6S,9R)-6-isopropyl-3,9-dimethyl-1,4-dioxaspiro[4.5]decan-2-one or (3S,5S,6S,9R)-6-isopropyl-3,9-dimethyl-1,4-dioxaspiro[4.5]decan-2-one. Furthermore it is also understood that the invention compound can be in the form of a mixture of any one of said stereoisomers.

According to an embodiment of the invention, the use as flavoring or perfuming ingredient of a compound of formula

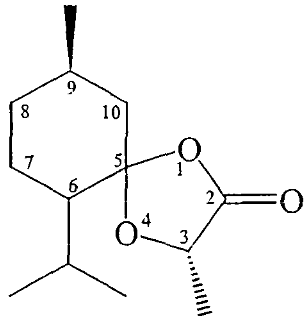

(II)

wherein the carbon atom 9 has a configuration R and the carbon atom 3 has a configuration S, in the form of any one of its isomers or of a mixture thereof, is particularly appreciated. Furthermore, the use of a mixture comprising at least 60% by weight, relative to the total weight of the mixture, of (3S,6S,9R)-6-isopropyl-3,9-dimethyl-1,4-dioxaspiro[4.5]decan-2-one is even more preferred.

As previously mentioned, the compound of formula (I) has organoleptic properties which render it very useful for the perfumery and flavor industry. More precisely, the compound of formula (I) possesses a minty, menthone type odor.

However, owing to its particular organoleptic properties, compound (I) has been found to be particularly interesting for the flavor industry, where it can be used for various purposes. Indeed, it has been surprisingly found that the flavor properties of the isomers may vary as a function of their stereo-configuration, and similarly the flavor properties of the mixtures can vary as a function of the relative ratio of the isomers present in said mixture. For example, a specific isomer can be employed to confer a strong cooling note with slightly minty aspect while a specific mixture of isomers can be employed to confer a strong minty note with cooling aspect.

The flavor of compound (I) is of the minty, fresh, piperita type and is remarkable by its strength and cleanness.

In particular (3S,6S,9R)-6-isopropyl-3,9-dimethyl-1,4-dioxaspiro[4.5]decan-2-one, which corresponds to an invention's mixture of isomers, is capable of imparting an interesting minty note with refreshing effect. However, the pure isomer (3S,5S,6S,9R)-6-isopropyl-3,9-dimethyl-1,4-dioxaspiro[4.5]decan-2-one or (3S,5R,6S,9R)-6-isopropyl-3,9-dimethyl-1,4-dioxaspiro[4.5]decan-2-one, possesses a flavor which is more of the cooling type with a minty connotation. In other words, the flavor of said isomers, when compared to the above-mentioned mixture, has the minty effect less pronounced and a refreshing note more pronounced. The enhanced refreshing cooling effect is especially perceivable for the (3S,5R,6S,9R) isomer which has a stronger and more lingering effect.

The use of (3S,5R,6S,9R)-6-isopropyl-3,9-dimethyl-1,4-dioxaspiro[4.5]decan-2-one or of (3S,6S,9R)-6-isopropyl-3,9-dimethyl-1,4-dioxaspiro[4.5]decan-2-one is a preferred embodiment of the invention.

As mentioned above, the invention concerns the use of a compound of formula (I) as perfuming or flavoring ingredients. In other words it concerns a method to confer, enhance, improve or modify the odor or flavor properties of a perfuming or flavoring composition or of a perfumed or flavored article, which method comprises adding to said composition or article an effective amount of at least a compound of formula (I). According to a particular embodiment of the invention, the use of the invention's compound as flavoring ingredient is preferred, especially to impart a mint or a mintcooling flavor.

It has also to be mentioned that by "use of a compound of formula (I)" it has to be understood here also the use of any composition containing compound (I) and which can be advantageously employed in perfumery or in flavors industry as active ingredients.

Said compositions, which in fact can be advantageously employed as perfuming or flavoring ingredient, are also an object of the present invention.

Therefore, another object of the present invention is a perfuming or flavoring composition comprising:

i) as perfuming or flavoring ingredient, at least one invention's compound as defined above;
ii) at least one ingredient selected from the group consisting of a perfumery carrier and a perfumery base, or at least one ingredient selected from the group consisting of a flavor carrier and a flavor base; and
iii) optionally at least one perfumery or flavor adjuvant.

By "perfumery or flavor carrier" we mean here a material which is practically neutral from a perfumery or flavor point of view, i.e. that does not significantly alter the organoleptic properties of perfuming or flavoring ingredients. Said

carrier may be a liquid or a solid.

As liquid carrier one may cite, as non-limiting examples, an emulsifying system, i.e. a solvent and a surfactant system, or a solvent commonly used in perfumery or flavors. A detailed description of the nature and type of solvents commonly used in perfumery or flavor cannot be exhaustive. However, one can cite as non-limiting example solvents such as dipropyleneglycol, diethyl phthalate, isopropyl myristate, benzyl benzoate, 2-(2-ethoxyethoxy)-1-ethanol or ethyl citrate, which are the most commonly used. As non-limiting examples of solvents commonly used in flavors, one can cite compounds such as propylene glycol, triacetine, triethyl citrate, benzylic alcohol, ethanol, vegetal oils or terpenes.

As solid carrier one may cite, as non-limiting examples, absorbing gums or polymers, or yet encapsulating materials. Examples of such materials, for examples, may comprise wall-forming and plasticizing materials, such as mono, di- or trisaccharides, natural or modified starches, hydrocolloids, cellulose derivatives, polyvinyl acetates, polyvinylalcohols, proteins or pectins, or yet the materials cited in reference texts such as H. Scherz, Hydrokolloids : Stabilisatoren, Dickungs- und Gehermittel in Lebensmittel, Band 2 der Schriftenreihe Lebensmittelchemie, Lebensmittelqualität, Behr's VerlagGmbH & Co., Hamburg, 1996. The encapsulation is a well known process to a person skilled in the art, and may be performed, for instance, using techniques such as spray-drying, agglomeration or yet extrusion ; or consists of a coating encapsulation, including coacervation and complex coacervation techniques.

Generally speaking, by "perfumery or flavor base" we mean here a composition comprising at least one perfuming or flavoring co-ingredient.

Said perfuming or flavoring co-ingredient is not of the formula (I). Moreover, by "perfuming or flavoring co-ingredient" it is meant here a compound, which is used in perfuming or flavoring preparation or composition to impart a hedonic effect. In other words such a co-ingredient, to be considered as being a perfuming or flavoring one, must be recognized by a person skilled in the art as being able to impart or modify in a positive or pleasant way the odor or taste of a composition, and not just as having an odor or taste.

The nature and type of the perfuming or flavoring co-ingredients present in the base do not warrant a more detailed description here, which in any case would not be exhaustive, the skilled person being able to select them on the basis of its general knowledge and according to intended use or application and the desired organoleptic effect. In general terms, these perfuming or flavoring co-ingredients belong to chemical classes as varied as alcohols, aldehydes, ketones, esters, ethers, acetates, nitriles, terpene hydrocarbons, nitrogenous or sulphurous heterocyclic compounds and essential oils, and said perfuming co-ingredients can be of natural or synthetic origin. Many of these co-ingredients are in any case listed in reference texts such as the book by S. Arctander, Perfume and Flavor Chemicals, 1969, Montclair, New Jersey, USA, or its more recent versions, or in other works of a similar nature, as well as in the abundant patent literature in the field of perfumery or flavor. It is also understood that said co-ingredients may also be compounds known to release in a controlled manner various types of perfuming or flavoring compounds.

For the compositions which comprise both a perfumery carrier and a perfumery base, other suitable perfumery carrier, than those previously specified, can be also ethanol, water/ethanol mixtures, limonene or other terpenes, isoparaffins such as those known under the trademark Isopar® (origin: Exxon Chemical) or glycol ethers and glycol ether esters such as those known under the trademark Dowanol® (origin: Dow Chemical Company).

Generally speaking, by "perfumery or flavor adjuvant" we mean here an ingredient capable of imparting additional added benefit such as a color, a particular light resistance, chemical stability and etc. A detailed description of the nature and type of adjuvant commonly used in perfuming or flavoring bases cannot be exhaustive, but it has to be mentioned that said ingredients are well known to a person skilled in the art.

An invention's composition consisting of at least one compound of formula (I) and at least one perfumery or flavor carrier represents a particular embodiment of the invention as well as a perfuming or flavoring composition comprising at least one compound of formula (I), at least one perfumery or flavor carrier, at least one perfumery or flavor base, and optionally at least one perfumery or flavor adjuvant.

According to a particular embodiment of the invention, a flavoring composition wherein the flavor base comprises at least one flavoring ingredient imparting minty and/or fruity flavor notes is particularly appreciated. Indeed, and surprisingly, it has been noted that there is a synergistic effect resulting in a cooling effect which is stronger than the one which would result from the simple addition of the cooling effect imparted by the compound (I) and the one which could be provided by the minty and/or fruity flavor. Moreover, said synergy increases also the long-lastingness of the cooling effect.

Therefore, as it can be noticed, the invention compound is very versatile and can be used to impart various organoleptic tonalities, e.g. a more or less pronounced cooling or minty effect, depending on the form in which the invention's compound is used.

It is also useful to mention here that the possibility to have, in the compositions mentioned above, more than one compound of formula (I) is important as it enables the perfumer or flavorist to prepare accords, perfumes or flavors, possessing the odor or flavor tonality of various compounds of the invention, creating thus new tools for their work.

Furthermore, it is understood here that, unless otherwise indicated or described, any mixture resulting directly from a chemical synthesis, e.g. without an adequate purification, in which the compound of the invention would be

involved as a starting, intermediate or end-product could not be considered as a perfuming or flavoring composition according to the invention.

Furthermore, the invention's compound can also be advantageously used in all the fields of the flavor or perfumery industry to positively impart or modify the flavor or the odor of an article into which said compound (I) is added. Consequently, said article is also an object of the present invention:

An example of such article is a food article, or flavored article. Said flavored article, which comprise:

i) as flavoring ingredient, at least one compound of formula (I), as defined above, or an invention's flavoring composition; and
ii) a foodstuff base or an oral care base,

is also an object of the present invention.

Suitable foodstuff or oral care bases include beverages, such as fruit juices, soft drinks or cold tea, soups, ice creams and sorbets, sweets, chewy sweets, confectioneries, chewing gums, chewing tobacco, pharmaceuticals preparation, dental care product, such as dentifrice gels and pastes, mouth washes or gargles.

For sake of clarity, it has to be mentioned that, by "foodstuff base", we mean here an edible product, e.g. a food, a beverage or an oral pharmaceutical composition. Therefore, a flavored article according to the invention comprises the functional formulation, as well as optionally additional benefit agents, corresponding to a desired edible product, e.g. a candy, and a flavor effective amount of at least an invention's compound. By "oral care base" we mean any consumer product which can be used for an oral care purpose, such as a dentifrice or a mouth wash solution or a functional confectionery such as a gum or tablet.

The nature and type of the constituents of the foodstuffs or beverages do not warrant a more detailed description here, which in any case would not be exhaustive, the skilled person being able to select them on the basis of its general knowledge and according to the nature of said product.

Another example of article in which the invention's compounds may be advantageously added is a perfumed article. Consequently, a perfumed article comprising:

i) as perfuming ingredient, at least one compound of formula (I), as defined above, or an invention's perfuming composition; and
ii) a non-palatable consumer product base,

is also an object of the present invention.

For the sake of clarity, it has to be mentioned that, by "non-palatable consumer product base" we mean here a non-edible consumer product, i.e which is not intended to be introduced in the mouth, and which is compatible with perfuming ingredients. In other words, a perfumed article according to the invention comprises the functional formulation, as well as optionally additional benefit agents, corresponding to a consumer product, e.g. a detergent or an air freshener, and an olfactive effective amount of at least one invention's compound.

The nature and type of the constituents of the non-palatable consumer product do not warrant a more detailed description here, which in any case would not be exhaustive, the skilled person being able to select them on the basis of its general knowledge and according to the nature and the desired effect of said product.

Examples of suitable non-palatable consumer products include solid or liquid detergents and fabric softeners as well as all the other articles common in perfumery, namely perfumes, colognes or after-shave lotions, perfumed soaps, shower or bath salts, mousses, oils or gels, hygiene products or hair care products such as shampoos, body-care products, deodorants or antiperspirants, air fresheners and also cosmetic preparations. As detergents there are intended applications such as detergent compositions or cleaning products for washing up or for cleaning various surfaces, e.g. intended for textile, dish or hard-surface treatment, whether they are intended for domestic or industrial use. Other perfumed articles are fabric refreshers, ironing waters, papers, wipes or bleaches.

Some of the above-mentioned consumer product bases may represent an aggressive medium for the invention compound, so that it may be necessary to protect the latter from premature decomposition, for example by encapsulation.

The proportions in which the compounds according to the invention can be incorporated into the various aforementioned articles or compositions vary within a wide range of values. These values are dependent on the nature of the article to be perfumed or flavored and on the desired organoleptic effect as well as the nature of the co-ingredients in a given base when the compounds according to the invention are mixed with perfuming or flavoring co-ingredients, solvents or additives commonly used in the art.

For example, in the case of perfuming compositions, typical concentrations are in the order of 0.01 % to 5 % by weight, or even more, of the compounds of the invention based on the weight of the composition into which they are

incorporated. Concentrations lower than these, such as in the order of 0.001 % to 1 % by weight, can be used when these compounds are incorporated into perfumed articles, percentage being relative to the weight of the article.

In the case of flavoring compositions, typical concentrations are in the order of 1 to 10000 ppm by weight, or even more, of the compounds of the invention based on the weight of the consumer product into which they are incorporated. Concentrations lower than these, such as in the order of 0.01 to 150 ppm by weight, can be used when these compounds are incorporated into flavored articles, amounts being relative to the weight of the article.

The compound of formula (I) could be obtained by the reaction of lactic acid and menthone, or 3-p-menthanone, in the presence of a catalytic amount of a protic or Lewis acid, preferably with an azeotropic distillation of water, as exemplified in the following Scheme:

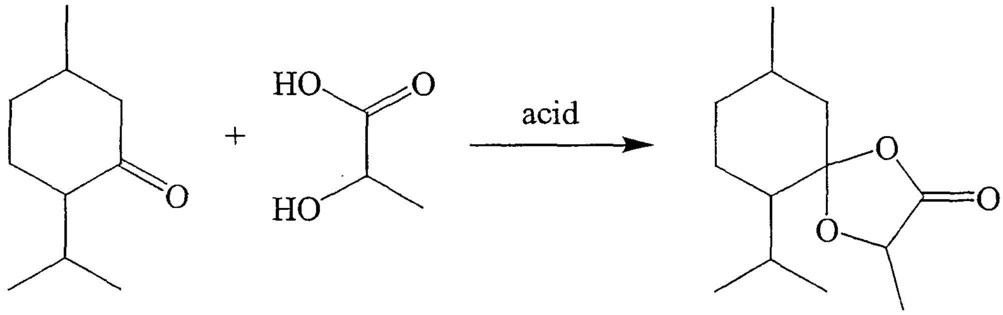


(I)

We have found that using said experimental conditions, the configuration of the asymmetric carbons of the starting materials are retained in the final product. Thus by selecting the enantiomeric, and where applicable diasteromeric, purity of menthone and lactic acid, it is possible to obtain a mixture of isomers of the compound of formula (I) wherein only the configuration of the spirocarbon is not predefined. Said mixture of isomers may further be purified using conventional methods, e.g. preparative GC, to obtain the pure isomers.

To obtain an isomer, in a form essentially pure, it is also possible to use a process analogue to the one described by W.H.Pearson et al., in J.Org.Chem. 1987, 52, 1355.

As it has been mentioned, a synergistic effect of the compound of formula (I), also referred to as compound (I), on other flavoring agents or compounds has been surprisingly observed.

Therefore, in an aspect, the present invention provides a composition comprising:

i) the compound of formula (I), and,
ii) at least one further compound having or imparting minty, fruity, and/or trigeminal organoleptic properties.

In an embodiment of the composition of the present invention, the compound according to formula (I) is selected from the group consisting of (3S,5R,6S,9R)-6-isopropyl-3,9-dimethyl-1,4-dioxaspiro[4.5]decan-2-one, (3S,5S,6S,9R)-6-isopropyl-3,9-dimethyl-1,4-dioxaspiro[4.5]decan-2-one, and mixtures of the two foregoing compounds.

Synergism, in the context of the present invention and generally in the context of flavor or aroma evaluation is established by a majority of an experienced panel following the protocol outlined below.

Accordingly, synergism in which a composition comprises two compounds (e.g. A + B), both of which exhibit the same, fruity, minty or trigeminal effect is defined below.

$$\text{Intensity of } ([A] + [B]) > \text{Intensity of } 2[A] \text{ or } 2[B]$$

The concentrations of all compounds if present alone are selected to provide similar organoleptic intensity. Due to the potentially different intensity of the compounds, the concentrations may vary. Hence, the brackets [] indicate a concentration for A and B, respectively, at which similar intensity of A and B is experienced, usually the concentration should be adjusted to give a low, but clearly detectable organoleptic effect.

Synergy can also be found in compositions having more than two compounds, for example ternary mixes (A

+ B + C). In this case, synergy is found if:

$$\text{Intensity of } ([A] + [B] + [C]) > \text{intensity of } 3[A] \text{ or } 3[B] \text{ or } 3[C]$$

Trigeminal effects or organoleptic properties are those that involve the activation of the trigeminal nerve. Preferably, by trigeminal effects or properties are meant cooling, tingling, salivating, pungent and/or hot organoleptic properties, for example. More preferably, the trigeminal effect or organoleptic property is a cooling effect or organoleptic property. Preferably, the effect is perceivable in the oral cavity of an individual.

Accordingly, compound (I) above has been combined with a flavor base having a flavouring co-ingredient as discussed above. Preferably, the co-ingredient as defined above is a compound having fruity, minty, and/or trigeminal organoleptic properties. Surprisingly, an unexpected enhancement of the compound (I)'s organoleptic properties is experienced in compositions comprising the co-ingredient. In particular, its cooling properties are unexpectedly enhanced.

The enhancement of the organoleptic effects was especially strong if used together with a co-ingredient having trigeminal properties.

Therefore, in an embodiment of the present invention, the at least one further compound has trigeminal organoleptic properties selected from the group consisting of cooling, tingling, hot and salivating properties. More preferably, the further compound has cooling properties.

The organoleptic properties mentioned herein are well-known to the skilled flavorist. It is worthwhile noting that one single compound may have several organoleptic properties. For example, many compounds have a cooling effect and at the same time a minty character.

A typical example for a plant extract having both cooling and minty organoleptic properties is peppermint oil.

Examples for compounds having "hot" organoleptic properties are piperine, pelargonyl vanillamide, vanillin butyl ether.

An example for a compound having "tingling" properties is spilanthol ((2E,6Z,8E)-N-isobutyl-2,6,8-decatrienamide).

Examples for compounds having "salivating" properties are citric acid, aspartic acid, and other organic acids.

Examples for compounds having "fruity" organoleptic properties include esters, such as ethyl butyrate.

Further compounds having the above properties are well-described in the prior art. A list of about 1200 cooling and/or minty compounds is given in H. R. Watson, Flavor: Its Chemical, Behavioural and Commercial Aspects Apt, C. M. Ed. Westview; Boulder co© (1977), 31-50.

More recent literature also discloses compounds having typical fruity, minty or trigeminal organoleptic properties. These compounds may also be used in the context of the present invention.

In an embodiment of the present invention, the at least one further compound is selected from the group consisting of menthol, 2-isopropyl-N,2,3-trimethylbutanamide ("WS-23") and a derivative of either of them, that is a derivative of either menthol or "WS-23". Preferably, the at least one further compound is menthol or a derivative of menthol.

Therefore, the present invention encompasses compositions comprising compound (I), and one or more additional further compounds. The further compound is different from other compounds present in the composition. For example, the present invention encompasses a composition comprising compound (I), menthol and a further compound, which may be a derivative of menthol.

Menthol is preferably (-)-(1R,3R,4S)-3-p-menthanol.

Derivatives of menthol (menthol-derived compounds), for the purpose of the present invention, are compounds that are synthesized with processes having menthol, menthone and/or menthane, in any of their isoforms, amongst the starting materials. Examples of such compounds include (-) isopulegol; p-menthane-2,3-diol; 3-hydroxymethyl p-menthane. A selection of alkyl-substituted menthanols that are considered to be menthol-derived compounds according to the present invention is disclosed in US 4,069,345.

Similarly, derivatives of 2-isopropyl-N,2,3-trimethylbutanamide ("WS-23"), are compounds that are synthesized with processes having WS-23 amongst the starting materials.

In an embodiment, the composition of the present invention comprises at least one further compound selected from the group consisting of menthol, menthyl succinate, menthyl lactate, p-menthane-3,8-diol, 8-p-menthen-3-ol, 3-(3'-P-menthanyloxy)-1,2-propanediol, menthone glycerol ketal, 2-(1-methylpropyl)-1-cyclohexanone, N-ethyl-3-P-menthanecarboxamide, aspartic acid, N-(4-hydroxy-3-methoxybenzyl)nonanamide, 5-[5-(1,3-benzodioxol-5-yl)-1-(1-piperidinyl)-2,4-pentadien-1-one, 6-isopropyl-3,9-dimethyl-1,4-dioxaspiro[4.5]decan-2-one, 2-isopropyl-N,2,3-trimethylbutanamide, and, 7-isopropyl-4,10-dimethyl-tricyclo[4.4.0.0(1,5)]decan-4-ol, 3-menthyl-3,6-dioxaheptanoate, 3-menthyl methoxyacetate , 3-menthyl-3,6,9-trioxadecanoate, 3-menthyl-(2-hydroxyethoxy)acetate, menthyl-11-hydroxy-3,6,9-trioxadecanoate.

In an embodiment, the at least one further compound is selected from the group consisting of menthyl succinate,

menthyl lactate, 3-(3'-P-menthanyloxy)-1,2-propanediol, and, menthone glycerol ketal.

These further compounds above can be in the form of any of their isomers, for those that have asymmetric carbon atoms. The more preferred isomers are given below.

The further components mentioned below mostly have cooling and/or minty effects. In case that there is another effect more pertinent, it is indicated below.

The isolation or synthesis of all the further components selected above, or of concentrated extract containing them, are known to the skilled person and most of them are commercially available. The textbook "Perfume and Flavor Chemicals" of Steffen Arctander, published by the author in 1969, reproduces the type of reaction and starting compounds used to synthesis menthol, menthyl lactate, and 1-piperoyl piperidine (piperine). (-)-Menthyl lactate is sold as Frescolat® ML by Haarmann & Reimer.

Some compounds useful for the purpose of the present invention may alternatively be obtained from natural extracts. Menthol, for example, may be isolated from mint oils It is commercialized in high quantities and is used as a starting molecule for the synthesis of numerous other compounds.

Menthyl succinate is preferably mono-menthyl succinate the synthesis of which monomenthyl-succinate is disclosed in WO 97/07771. This compound and aspartic acid maybe commercially obtained from Sigma-Aldrich (www.sigmaaldrich.com).

Preferably, 3-(3'-p-menthanyloxy)-1,2-propanediol is (-)-(1'R, 3'R, 4'S)- 3-(3'-p-menthanyloxy)-1,2-propanediol, also known as Coolant Agent 10®. Its synthesis is disclosed in US 4,459,425 and it may be commercially obtained from Takasago, Japan.

Preferably, menthone glycerol ketal is (6S,9R)-6-isopropyl-9-methyl-1,4-dioxaspiro[4.5]decane-2-methanol. Its synthesis is disclosed in EP 0 485 170 and it is commercially obtainable under the tradename Frescolat MGA® from Haarman & Reimer, Kings Park, Australia.

2-(1-Methylpropyl)-1-cyclohexanone is disclosed in JP 2001/348308 may commercially be obtained from Givaudan, Switzerland under the product name Freskomenthe®.

Preferably, N-ethyl-3-P-menthanecarboxamide is (1R,3R,4S)-N-ethyl-3-P-menthanecarboxamide, also known as WS-3®. Its synthesis is disclosed in US 4,060,091.

The synthesis of 2-isopropyl-N,2,3-trimethylbutanamide, also known as WS-23® is disclosed in DE 2503555. WS-3® and WS-23® may commercially be obtained from Millennium Speciality Chemicals (www.millenniumchem.com).

N-(4-hydroxy-3-methoxybenzyl)nonanamide, also called pelargonyl vanillamide has a "hot" trigeminal effect and is commercially available from Sigma-Aldrich (www.sigmaaldrich.com).

Preferably, 5-[5-(1,3-benzodioxol-5-yl)-1-(1-piperidinyl)-2,4-pentadien-1-one is (E,E)- 5-[5-(1,3-benzodioxol-5-yl)-1-(1-piperidinyl)-2,4-pentadien-1-one, also known as piperine. It has a "hot" effect. This compound is commercially obtainable from Sigma-Aldrich.

Preferably, 7-isopropyl-4,10-dimethyl-tricyclo[4.4.0.0(1,5)]decan-4-ol is (1R, 4S, 5R, 6R, 7S, 10R)- 7-isopropyl-4,10-dimethyl-tricyclo[4.4.0.0(1,5)]decan-4-ol, also called cubebol. US 6,214,788 discloses how this compound can be isolated from cubeb oil, which is commercially obtainable.

3-Menthyl-3,6-dioxaheptanoate, 3-menthyl methoxyacetate , 3-menthyl-3,6,9-trioxadecanoate, 3-menthyl-(2-hydroxyethoxy)acetate, and mehthyl-11-hydroxy-3,6,9-trioxadecanoate are disclosed in US 6,359,168.

The relative amounts of the compound of formula (I) together with the at least one further compound having or imparting fruity, minty, or trigeminal, for example cooling, tingling salivating, and/or hot, organoleptic properties is strongly dependent on the intensity of the at least one further compound. As the skilled person is aware, different compounds may vary largely in their sensory intensity and their concentrations thus have to be adapted to about similar organoleptic properties, and the relative amounts or weight ratio may thus vary broadly.

The present invention provides a composition comprising:

i) the compound of formula (I), and,
ii) at least one further compound having or imparting minty, fruity and/or trigeminal organoleptic properties.

Preferably, the weight ratio of (i) : (ii) is in the range of 1 : 0.1 - 5, more preferably, 1 : 0.2 -3, most preferably 1 : 0.5 - 1.5.

In case the at least one further compound is menthol, 2-isopropyl-N,2,3-trimethylbutanamide or a derivative of either of them, the above-said equally applies.

In an embodiment, the present invention provides a composition comprising:

i) the compound of formula (I),
ii) menthol, 2-isopropyl-N,2,3-trimethylbutanamide, or a derivative of menthol or 2-isopropyl-N,2,3-trimethylbutanamide, and, optionally,
iii) at least one further compound having or imparting minty, fruity, and/or trigeminal organoleptic properties.

In compositions that have at least two or at least three compounds as defined above, all components are different. Provided that compound (iii) is different from compounds (i) and (ii), it can be selected from all compounds having or imparting fruity, minty and/or trigeminal organoleptic properties, as disclosed above.

In these compositions, the weight ratio of (i) the compound of formula (I), (ii) menthol, 2-isopropyl-N,2,3-trimethylbutanamide or the derivative of either of them, and, (iii) the at least one further compound imparting fruity, minty, and/or trigeminal organoleptic properties will largely depend on the intensity of each of the compounds, which can vary largely for each compound.

Preferably, the weight ratio of (i) : (ii) : (iii) is in the range of 1.0 : 0.1 - 5.0 : 0.1 - 5.0, more preferably, 1.0 : 0.2 -3.0 : 0.2 -3.0, most preferably 1.0 : 0.5 - 1.5 : 0.5 -1.5.

For example, a composition according to the present invention comprises (i) the compound of formula (I), (ii) menthol, and (iii) menthyl succinate.

According to another example, the composition according to the present invention comprises (i) the compound of formula (I), (ii) menthol, and (iii) (-)-(1'R, 3'R, 4'S)- 3-(3'-p-menthanyloxy)-1,2-propanediol.

According to a further example, the composition of the present invention comprises (i) the compound of formula (I), (ii) menthol, and (iii) menthone glycerol ketal.

Preferably, the weight ratio of the different components of the three exemplary compositions mentioned above (i) : (ii) : (iii) are in the range of 1.0 : 0.5 - 1.5 : 0.1-1.0.

In an embodiment, the present invention provides product comprising the composition according to the invention, which is selected from the group consisting of a food product, a beverage, a pharmaceutical product, an oral care product, and a perfumery product.

Examples of a food product include sweetened products, such as chewing gums, candy (for example, hard boiled candy), chewy sweets, dairy products (for example, yogurts, dairy drinks, ice-creams), soy-based products, and bakery products (for example minty biscuits, fat fillings).

Other examples of food products include savory products, such as soups, condiments, spice mixes, refrigerated and frozen products.

Examples of beverages include carbonated, non-carbonated drinks and alcoholic beverages. Non-carbonated drinks include, for example, a juice, a tea, a coffee, a lemonade, and a chocolate drink.

The above products may be prepared as usual in the art, while adding the composition of the present invention at a moment during preparation suitable for addition of flavors. Accordingly, the composition of the present invention may be added together with other flavor components of additives. If appropriate, the compounds of the composition of the invention may have to be dissolved in a suitable solvent, such as, for example, propylene glycol, triacetin (1,2,3-propanetriyl triacetate), ethanol, neobee® (www.stepan.com), benzyl alcohol, and/or vegetable oils.

In an embodiment, the product of the present invention is an oral care product, selected from the group of a toothpaste, a mouthwash, a gargle, and a chewing gum.

According to another embodiment of the product of the present invention, the perfumery product is selected from the group consisting of a body care product, a home care product and a fine fragrance. Examples of body care products are shampoos, shower gels, soaps, and ointments, examples for home care products include detergents, cleaners, softeners and air fresheners. Perfumes are an example for fine fragrances.

As indicated above in respect of compound (I), the composition comprising compound (I) and at least one further compound having or imparting fruity, minty, and/or trigeminal, for example, cooling, tingling salivating, and/or hot organoleptic properties may further comprise a perfuming or flavoring carrier and base, and, optionally, a perfumery or flavour adjuvant, as defined above.

The perfuming or flavor base may comprise a co-ingredient as defined above.

The concentration of the compounds of the composition of the invention in the products depends largely on the nature of the product. One can distinguish products, which are foreseen to be exposed to the oral cavity, such as beverages, food, oral care, and orally consumable pharmaceutical products. Usually, much higher concentrations of the compounds of composition of the present invention are needed for perfumery products.

If the product of the invention is a product which is foreseen to be exposed to the oral cavity, the product may comprise 1 to 20'000 ppm, preferably 10 - 10'000 ppm, more preferably 100 - 5'000 ppm, independently, of each of the different compounds of the composition of the present invention, expressed as parts of weight of the product.

Preferably, the product comprises 1 to 20'000 of compound (I), and, 1 to 20'000 of menthol, 2-isopropyl-N,2,3-trimethylbutanamide or a derivative of either of them, more preferably it comprises 10 - 10'000 of compound (I), and, 10 - 10'000 of menthol, 2-isopropyl-N,2,3-trimethylbutanamide or a derivative of either of them.

If the product of the invention is a perfumery product, the concentration of the compounds of the present invention correspond, in total, to the concentration of the perfumery composition indicated above.

In the figures,

Figure 1 shows the cooling intensity of compound (I) (0.3%) and menthyl succinate (0.15%) (= sample 1) compared

to menthyl succinate (0.3%) alone (= sample 2) in hard boiled candies. It can be seen that the cooling intensity of [compound (I)] + [menthyl succinate] is greater than the cooling intensity of 2x [menthyl succinate]. Therefore, there is a synergistic interaction between compound (I) and menthyl succinate.
Figure 2 shows the cooling intensity of compound (I) and menthol (40 ppm each, = sample 1) compared to compound (I) alone (80 ppm, = sample 2) in aqueous solutions. It can be seen that the cooling intensity of [compound (I)] + [menthol] is greater than the cooling intensity of 2x [compound (I)]. Therefore, there is a synergistic interaction between compound (I) and menthol.

The invention will now be described in further detail by way of the following examples, wherein the abbreviations have the usual meaning in the art, the temperatures are indicated in degrees centigrade (°C) ; the NMR spectral data were recorded in $CDCl_3$ (if not stated otherwise) with a 400 MHz machine for $^1H$, the chemical displacement δ are indicated in ppm with respect to the TMS as standard, the coupling constants J are expressed in Hz.

Example 1

Synthesis of a mixture of isomers of the compound (I)

a) *Preparation of (3S,6S,9R)-6-isopropyl-3,9-dimethyl-1,4-dioxaspiro[4.5]decan-2-one* A solution of 3-p-menthanone (containing approximately 70% of (1R,4S)-3-p-menthanone and 30% of (1R,4R)-3-p-menthanone) (30 g; 195 mmol), L-lactic acid (50g at 80% purity; 444 mmol), toluene (250 ml) and pTsOH (1.5 g) was refluxed in a Dean-Stark condenser for 6 hours. After that, the mixture was cooled, washed three times with water, then with a $NaHCO_3$ water solution and brine. The organic phase was concentrated on a rotary evaporator and distilled under vacuum to recover a fraction distilling between 110°-155°C (45 mbars). Said fraction is distilled a second time, to eliminate the starting 3-p-menthanone, at 0.08 mbars and 90°C to yield 14.5 g of the title compound in the form of a 8/4/1/1 mixture of four isomers (yield of 33%).
b.p. = 90°C at 0.08 mbar.
$^1H$-NMR: 4.57-4.4 (m, 1H), 2.2 (q, J=7.4 ,1H), 2.0-1.65 (m, 7H), 1.55-1.4 (m, 3.H), 1.22 (t, J=12.5, 1H), 1.0-0.8 (m, 9H).
MS (for all isomers): 226 (M+); 211; 182; 141 (100); 113; 112; 69; 55; 41.
The two main isomers can be separated by a preparative GC using a Jas-2000 system and a HP-WAX column of 10 meter length.

b) *(3S,SR,6S,9R)-6-isopropyl-3,9-dimethyl-1,4-dioxaspiro[4.5]decan-2-one*
This compound is the main isomer of the mixture obtained above.
$[\alpha]_D^{20}$ = +21.2° for a solution 2.7% w/w in $CHCl_3$.
$^1H$-NMR: 4.51 (q, J=6.7, 1H), 2.18 (m, 1H), 2.03-1.63 (m, 4H), 1.48 (d, J=6.7, 3H), 1.46 (m, 1H), 1.43 (br.m, 1H), 1.23 (t, J=12.8, 1H), 0.95 (d, J=6.7, 3H), 0.95 (m, 1H), 0.92 (d, J=6.6, 3H), 0.82 (d, J=7.2, 3H).
$^{13}C$-NMR: 16.7(q), 17.9(q), 21.8(q), 22.8(t), 23.3(q), 24.4(d), 29.9(d), 34.0(t), 45.3(t), 48.4(d), 69.7(d), 113.3(s), 173.9(s)
MS: 226 (M+); 141 (100); 112 (41); 69 (85); 55 (42); 41 (49).

c) *(3S,SS,6S,9R)-6-isopr-opyl-3,9-dinaethyl-1,4-dioxaspiro[4.5]decan-2-one*
This compound is the second main isomer of the mixture obtained above.
Melting point: 33-34°C
$[\alpha]_D^{20}$ = -16.6° for a solution 1.8% w/w in $CHCl_3$.
$^1H$-NMR: 4.47 (q, J=6.7, 1H), 1.92 (m, 1H), 1.85-1.38 (m, 7H), 1.49 (d, J=6.7, 3H), 0.93 (d, J=6.7, 3H), 0.92 (d, J=7, 3H), 0.9 (m, 1H), 0.88 (d, J=7, 3H).
$^{13}C$-NMR: 16,7(q), 17.9(q), 21.8(q), 22.8(t), 23.3(q), 24.4(d), 29.9(d), 34.0(t), 45.3(t), 48.4(d), 69.7(d), 113.3(s), 173.9(s)
MS: 226 (M+); 141 (100); 112 (41); 69 (85); 55 (42); 41 (49).

Example 2

A dentifrice gel containing a compound according to the invention

To an unflavored dentifrice gel, commercially available, were added various amounts of different flavoring agents, according to the following Table 1.

Table 1: Composition of various dentifrice gels

| | Ingredient and amounts | | | | | |
|---|---|---|---|---|---|---|
| Gel N° | Basic gel[1)] | Mint flavor[2)] | MGA[3,4)] | Compound of example 1a[4)] | Compound of example 1b[4)] | Compound of example 1c[4)] |
| **1** | 10 g | 30 µl | | | | |
| **2** | 10 g | | 150 µl | | | |
| **3** | 10 g | | | 300 µl | | |
| **4** | 10 g | | | | 300 µl | |
| **5** | 10 g | | | | | 300 µl |
| **6** | 10 g | 30 µl | 150 µl | | | |
| **7** | 10 g | 30 µl | | 300 µl | | |
| **8** | 10 g | 30 µl | | | 300 µl | |
| **9** | 10 g | 30 µl | | | | 300 µl |

1) Roquette Gel Dentifrice Enfant; form Roquette SA, France
2) Mint Arvensis essential oil
3) 2-Hydroxyethyl (1R,3R,4S)-3-p-menthanyl carbonate; from Symrise AG (Germany), known minty-cooling ingredients
4) used as a solution of 1 part by weight into 300 part by weight of EtOH.

The various gels thus obtained were tested by a panel of flavorists. The flavor intensity of each gel was described and scored on a scale from 1 to 10 (1 being the weakest and 10 the strongest possible effect). The refreshing or cooling intensity was also scored on a scale from 1 to 10. The results are described in Table 2.

Table 2: Evaluation of the dentifrice gels of Table 1

| Gel N° | Flavor intensity (score) | Cooling effect intensity |
|---|---|---|
| **1** | Minty (3) | 4 |
| **2** | Minty (2) | 3 |
| **3** | Minty, pulegone like (4) | 1 |
| **4** | Minty (2) | 2 |
| **5** | Minty (2) | 2 |
| **6** | Minty (4) | 6 |
| **7** | Minty, pulegone like (5) | 3 |
| **8** | Minty (4) | 6 |
| **9** | Minty (4) | 5 |

As can be noticed from Table 2,

a) when an invention's compound or mixture is used alone, the mint chartered conferred to the article gel can be either predominant (entry 3) or, at least, as strong as the cooling effect (entries 4 and 5), whereas for the reference gels (entries 1 and 2), the cooling effect is always predominant;
b) when a mixture of invention's compounds is used together with a mint/cooling aroma, the minty character is still predominant (entry 7), whereas when it is used as a pure isomer (entry 8 and 9), the cooling effect is boosted and becomes predominant;
c) when used as a cooling agent, the pure isomers can perform as well as other known cooling agents (entries 6, 8 and 9).

Example 3

Hard boiled candies containing a compound according to the invention

Various hard-boiled candies, according to the following Table 3, were prepared by admixing glucose syrup (30g) and sucrose syrup (122g) and the mixture was heated to 148°C in a copper pan. At 148°C, the copper pan was removed from the gas frame and placed in a warm water bath (40°C). After a few seconds, the copper pan was removed and the temperature checked. When temperature reached 135°C, flavor systems were added. The cooked mass was then poured, at ambient temperature, into appropriate Teflon molds.

Table 3: Amounts (part by weight) present in each candy

| Candy N° | Candy base[1)] | Citric acid | Mint flavor[2)] | Fruit flavor[3)] | Compound of example 1c |
|---|---|---|---|---|---|
| **1** | 99.315 | 0.650 | | 0.035 | |
| **2** | 99.235 | 0.650 | | 0.035 | 0.080 |
| **3** | 99.960 | | 0.040 | | |
| **4** | 99.860 | | 0.040 | | 0.100 |

1) Unflavored sugar-based hard boiled candy
2) Mint Arvensis essential oil
3) Strawberry flavor, origin: Firmenich SA, Switzerland.

a) Candy 2, compared with candy 1, possesses a well-balanced cooling note with a minty aspect. This new note had a good lasting and married quite well with the fruit flavor which acquired also a new dimension.
b) Candy 4, compared with candy 3, shows, together with the minty note, a perceivably enhanced cooling intensity with an increased lasting.

Examples 4 - 7

For the following Examples 4-7, synergic effects of further compounds on the cooling sensation of the compound of formula (I) were evaluated by comparing binary or ternary compositions with compositions based on one compound alone only. The concentrations of the flavors in the compositions were adjusted to concentrations that give similar intensity, if one flavor is taken alone. For the examples, compound (I) was (3S,6S,9R)-6-isopropyl-3,9-dimethyl-1,4-dioxaspiro[4.5]decan-2-one, which corresponds to an invention's mixture of isomers and menthol was ((-)-(1R,3R,4S)-3-p-menthanol).

The evaluation method involved 10 expert panelists that participated in one tasting session per application in the sensory testing booths. Two samples were presented to panelists in a randomized order to avoid presentation order effect. For each of the samples, expert panelists were asked to rate the "cooling" intensity on a 0 to 10 cm linear scales (from 0="absent" to 10="very strong") after one minute chewing/tasting. For each application, mean intensity was calculated and compared by pair using a Student t-test to underline if one of the sample was perceived as significantly more cooling than the other one at a 95% level of confidence. Synergism is found to be present under the principles set forth in the description.

Percentages and other relative indications given in parts of a total are by weight.

Example 4

Synergistic interaction of menthyl succinate and compound (I) on cooling intensity in hard-boiled candies

Two different samples of hard-boiled candies were prepared comprising compound (I) and mono-menthyl succinate (binary composition, sample 1), and, mono-menthyl succinate alone (sample 2) based on the protocol given below.

The candies were prepared by adding 100 g isomalt and 30 g water to a copper pan. The ingredients were heated to 160°C with a gas flame and mixed. The copper pan was then put into a water bath (40°C) and cooled slowly to 130°C, the temperature at which the flavors were added under mixing the relative amounts indicated below. Before addition, flavors were dissolved in propylene glycol.

| | Sample 1 | Sample 2 |
|---|---|---|
| Compound (I) | 0.3% | - |
| Mono-menthyl succinate | 0.15% | 0.3% |
| Propylene glycol | 0.3% | 0.45% |

The weight percentages are expressed as part of a total including all ingredients but the flavors and their solvents.

The mixed ingredients were poured into empty ejector-pins of a Teflon mold and left until solidification under cooling to room temperature. Once cooled, the hard-boiled candies were ejected from the mold.

Panelists evaluated the samples as described above. Sample 1 was attributed a mean cooling intensity of 2.86 ±0.88, and sample 2 had 1.58 ±0.44. These results are illustrated in Figure 1. Due to the high intensity of the composition in sample 1, it was concluded that compound (I) and mono-menthyl succinate synergistically enhance the cooling property of hard-boiled candies.

Example 5

Synergistic interaction of menthol and compound (I) in aqueous solutions

Aqueous solutions containing menthol and the compound of formula (I) = sample 1, a binary composition, and (B) the compound of formula (I) alone (= sample 2) were prepared by dissolving the flavors in propylene glycol and mixing them with water as follows.

| | Sample 1 | Sample 2 |
|---|---|---|
| Compound (I) | 40 ppm | 80 ppm |
| Menthol | 40 ppm | 0 |
| Propylene glycol | 120 ppm | 120 ppm |
| Water | 99.98% | 99.98% |
| Total | 100% | 100% |

Panelists evaluated the samples as described above. The cooling intensity of sample 1 was 4.19 ±1.15, while the cooling intensity of sample 2 was 0.77 ±0.50, see Figure 2. Due to the high intensity of the composition sample 1, it is concluded that menthol and compound (I) synergistically enhance the cooling property of an aqueous solution.

Example 6

Synergistic interaction of menthol, menthyl succinate and compound (I) in hard boiled candy

Two different samples of hard-boiled candies were prepared comprising compound (I), menthol, and menthyl succinate (ternary composition, sample 1), and, menthyl succinate alone (sample 2) based on the protocol given in Example 4. Flavor compounds were added at the relative amounts given below:

| | Sample 1 | Sample 2 |
|---|---|---|
| Compound (I) | 1800 ppm | - |
| Menthol | 1800 ppm | - |
| Menthyl succinate | 900 ppm | 2700 ppm |
| Triacetin | 4500 ppm | 10800 ppm |

The candies were prepared following the procedure of Example 4, with the difference that flavors were dissolved in triacetin prior to mixing with molten isomalt and water.

Panelists evaluated the samples as described above. Sample 1 was attributed a mean cooling intensity of 7.52 ±1.48, and sample 2 had 2.79 ±2.60. Due to the high intensity of the composition in sample 1, it is concluded that compound (I), menthol and menthyl succinate synergistically enhanced the cooling property of hard-boiled candies.

Example 7

Synergistic interaction of menthol, menthone glycerol ketal and compound (I) in chewing gums

Two groups of samples of chewing gums were prepared, one of them containing a ternary composition of flavours consisting of compound (I), menthol, and (6S,9R)-6-isopropyl-9-methyl-1,4-dioxaspiro[4.5]decane-2-methanol (Frescolat MGA®) from Haarman & Reimer (= sample 1), and, another group based on Frescolat MGA® alone (= sample 2) based on the ingredients given below (in percent by weight):

| | Sample 1 | Sample 2 |
|---|---|---|
| Gum base[1] | 22 | 22 |
| Crystalline sorbitol | 54.80 | 54.80 |
| Lycasin® 80/55 Maltitol solution[2] | 12 | 12 |
| 70% sorbitol solution (heated to 115°C) | 6 | 6 |
| Glycerine (99%) | 4 | 4 |
| Acesulfame potassium | 0.10 | 0.10 |
| Aspartame | 0.10 | 0.10 |
| Total: | 100 | 100 |
| Added flavours (added as parts of the above total) | | |
| Compound of formula (I) | 1800 ppm | - |
| Menthol | 1800 ppm | - |
| Menthone glycerol ketal | 900 ppm | 2700 ppm |
| Triacetin | 4500 ppm | 10800 ppm |

1) Sierra® flavours, obtained from Cafosa Gum S.A. (www.cafosa.com).
2) 75% solids

The chewing gums were made by preparing a humectant syrup including the maltitol solution, the sorbitol solution and glycerine mixed until homogeneity in a beaker.

Crystalline sorbitol, acesulfame potassium and aspartame were dry mixed to obtain a single mixture of sweeteners. Half of the mixture of sweeteners are added to a sigma®-blade mixer, equipped with heated water jacked at a temperature of 50°C. The gum base is heated until being soft and added to the blade mixer, followed by mixing for 2 minutes.

The remaining part of the sweeteners' mixture and the humectants syrup are added to the blade-mixer and mixed for 7 minutes. Flavors are added to the blade-mixer and the whole chewing gum composition is further mixed for 1 minute. Thereafter, the chewing gum composition was shaped into sticks.

Panelists evaluated the chewing gums as obtained above. Sample 1 was attributed a mean cooling intensity of 4.84 $\pm$1.25, and sample 2 had 2.15 $\pm$1.90. Due to the high intensity of the composition in sample 1, it was concluded that compound (I), menthol and menthone glycerol ketal synergistically enhance the cooling property of chewing gums (I).

Example 8

Synergistic interaction of menthol, menthyl lactate and compound (I) in toothpaste

Two different samples of toothpaste were prepared comprising different flavor compounds: Sample 1 contained a ternary composition comprising compound (I), menthol, and (-)-menthyl lactate (Frescolat® ML), and, sample 2 contained menthyl lactate alone.

60 g of carboxy methyl cellulose (Obtained from Hercules BV Aqualon Div.) were mixed with 1 kg of glycerin in a lab-mixer at high speed for 7 minutes. Thereafter, the solution was kept quite until hydration.

10 g of saccharine sodium, 5 g of sodium benzoate, 16 g of sodium fluoride, and 25 g of titanium dioxide were poured, in this order, into 1.5 kg of distilled water using a Turrax®-mixer for 10 minutes. 1250 g of liquid sorbitol (Nesosorb® 70/70 from Roquettes Frères, France) were added, followed by further mixing for 3 minutes. The hydrated carboxy methyl cellulose obtained above was added and mixed for 10 minutes to obtain a mixture 1.

Independently, a sodium lauryl sulphate (SLS) solution was prepared by gently mixing 75 g SLS (Texapon

K12®, Cognis GmbH, Germany) with 200 g of distilled water. This was let set overnight.

Mixture 1 was poured into a Stephan-mixer® and let set for 3 hours. Thereto, 600 g of Sorbosil® Tc 15 (INEOS Silicas Ltd., Warrington, UK) and 300 g of Sorbosil® Ac 77 (same supplier) were added and mixed under vacuum (50mbar) for 30 minutes. The pan was opened and the set SLS-solution was added. The final composition was mixed under vacuum (50 mbars) for 5 minutes, to obtain about 5 kg of toothpaste.

The toothpaste was then divided into two samples and supplied with flavor ingredients in the relative amounts given below. Flavors were dissolved in the solvent (Triacetin) before addition:

| | Sample 1 | Sample 2 |
|---|---|---|
| Compound (I) | 1500 ppm | - |
| Menthol | 1500 ppm | - |
| Menthyl lactate | 750 ppm | 2250 ppm |
| Triacetin | 3750 ppm | 5250 ppm |

Panelists evaluated the toothpastes so obtained as obtained above. Sample 1 was attributed a mean cooling intensity of 7.14 ±1.94, and sample 2 had 3.81 ±1.56.

Due to the high intensity of the composition in the toothpaste of sample 1, it is concluded that compound (I), menthol and menthyl lactate synergistically enhanced the cooling properties in toothpastes.

Example 9

A mouthwash containing the composition of the present invention

A mouthwash containing a composition comprising compound (I) and peppermint oil is prepared by mixing 200 g of ethanol (95 vol.-%), 120 g of Glycerin (87 vol.-%), 1.5 g of sodium saccharine and 1.5 g of Tween 80® in 676 g of demineralised water.

0.2 g of compound (I) and 0.8 g of peppermint oil are dissolved in 1 g of propylene glycol and added to the above mixture to obtain a mouthwash having strong minty and cooling organoleptic properties.

## Claims

1. Use as perfuming or flavoring ingredient of a compound or formula

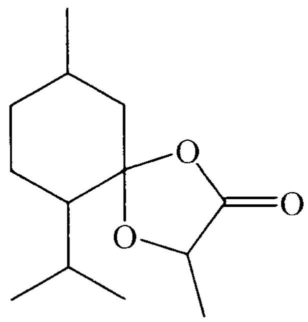

(I)

in the form of any one of its isomers or of a mixture thereof.

2. Use according to claim 1, **characterized in that** said compound is selected from the group consisting of (3S,6S, 9R)-6-isopropyl-3,9-dimethyl-1,4-dioxaspiro[4.5]decan-2-one, (3S,5S,6S,9R)-6-isopropyl-3,9-dimethyl-1,4-dioxaspiro[4.5]decan-2-one and (3S,5R,6S,9R)-6-isopropyl-3,9-dimethyl-1,4-dioxaspiro[4.5]decan-2-one.

3. A flavoring composition comprising:

   i) as flavoring ingredient, at least one compound of formula (I), as defined in claim 1 or 2;

ii) at least one ingredient selected from the group consisting of a flavor carrier and a flavor base; and
iii) optionally at least one flavor adjuvant.

**4.** A composition according to claim 3, **characterized in that** the flavor base comprises at least one flavoring ingredient imparting minty and/or fruity flavor notes.

**5.** A flavored article comprising:

i) as flavoring ingredient, at least one compound of formula (I), in claim 1 or 2, or a flavoring composition, as defined in claim 3 or 4; and
ii) a foodstuff base or an oral care base,

**6.** A flavored article according to claim 5, **characterized in that** said foodstuff base or an oral care base is a beverage, a fruit juice, a soft drink, a cold tea, a soup, an ice cream, a sorbet, a sweet, a chewy sweet, a confectionery, a chewing gum, a chewing tobacco, a pharmaceutical preparation, a dental care product, a dentifrice gel, a paste, a mouth wash or a gargle.

**7.** A perfuming composition comprising:

i) as perfuming ingredient, at least one compound of formula (I), as defined in claim 1 or 2;
ii) at least one ingredient selected from the group consisting of a perfumery carrier and a perfumery base; and
iii) optionally at least one perfumery adjuvant.

**8.** A perfumed article comprising:

i) as perfuming ingredient, at least one compound of formula (I), in claim 1 or 2, or a perfuming composition, as defined in claim 7; and
ii) a non-palatable consumer product base.

**9.** A perfumed article according to claim 8, **characterized in that** said non-palatable consumer product base is in the form of a solid or liquid detergent, a fabric softener, a perfume, a cologne, an after-shave lotion, a perfumed soap, a shower or bath salt, mousse, oil or gel, a hygiene product, a hair care product, a shampoo, a body-care product, a deodorant, an antiperspirant, an air freshener, a cosmetic preparation, a fabric refresher, an ironing water, a paper, a wipe or a bleach.

**10.** A composition comprising:

i) the compound of formula (I), and,
ii) at least one further compound having or imparting minty, fruity, and/or trigeminal organoleptic properties.

**11.** The composition according to claim 10, comprising:

i) the compound of formula (I),
ii) menthol, 2-isopropyl-N,2,3-trimethylbutanamide, or a derivative of menthol or 2-isopropyl-N,2,3-trimethylbutanamide, and, optionally,
iii) at least one further compound having or imparting minty, fruity, and/or trigeminal organoleptic properties selected from the group consisting of cooling, tingling, hot and salivating properties.

**12.** The composition according to claim 10, in which the at least one further compound is selected from the group consisting of menthyl succinate, menthyl lactate, 3-(3'-P-menthanyloxy)-1,2-propanediol, and, menthone glycerol ketal.

**13.** The composition according to claim 10, in which the compound according to formula (I) is selected from the group consisting of (3S,5R,6S,9R)-6-isopropyl-3,9-dimethyl-1,4-dioxaspiro[4,5]decan-2-one, (3S,5S,6S,9R)-6-isopropyl-3,9-dimelhyl-1,4-dioxaspiro[4.5]decan-2-one, and mixtures of the two foregoing compounds.

**14.** A product comprising the composition according to claim 10, which is selected from the group consisting of a food product, a beverage, a pharmaceutical product, an oral care product, and a perfumery product.

## Patentansprüche

1. Verwendung als parfümierender oder aromatisierender Bestandteil einer Verbindung der Formel

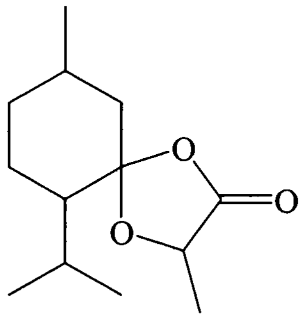

(I)

in Form irgendeines ihrer Isomere oder einer Mischung derselben.

2. Verwendung nach Anspruch 1, **dadurch gekennzeichnet, dass** die Verbindung aus der Gruppe ausgewählt ist bestehend aus (3S,6S,9R)-6-Isopropyl-3,9-dimethyl-1,4-dioxaspiro[4,5]decan-2-on, (3S,5S,6S,9R)-6-Isopropyl-3,9-dimethyl-1,4-dioxaspiro[4,5]decan-2-on und (3S,5R,6S,9R)-6-Isopropyl-3,9-dimethyl-1,4-dioxaspiro[4,5]decan-2-on.

3. Aromatisierende Verbindung umfassend :

i) als aromatisierenden Bestandteil, mindestens eine Verbindung der Formel (I), wie in Anspruch 1 oder 2 definiert;
ii) mindestens einen Bestandteil ausgewählt aus der Gruppe bestehend aus einem Aromaträger und einem Aromagrundstoff; und
iii) wahlweise mindestens ein Aromahilfsmittel.

4. Zusammensetzung nach Anspruch 3, **dadurch gekennzeichnet, dass** der Aromagrundstoff mindestens einen aromatisierenden Bestandteil umfasst, der Geschmacksnoten nach Minze und/oder Obst verleiht.

5. Aromatisierter Artikel umfassend :

i) als aromatisierenden Bestandteil mindestens eine Verbindung der Formel (I) in Anspruch 1 oder 2 oder eine aromatisierende Zusammensetzung wie in Anspruch 3 oder 4 definiert; und
ii) einen Nahrungsmittelgrundstoff oder einen Mundpflegegrundstoff.

6. Aromatisierter Artikel nach Anspruch 5, **dadurch gekennzeichnet, dass** der Nahrungsmittelgrundstoff oder ein Mundpflegegrundstoff ein Getränk, ein Obstsaft, ein alkoholfreies Getränk, ein Eistee, eine Suppe, ein Speiseeis, ein Sorbet, eine Süßspeise, ein Kaubonbon, eine Süßware, ein Kaugummi, ein Kautabak, eine pharmazeutische Zubereitung, ein Zahnpflegeprodukt, ein Zahnpastagel, eine Paste, ein Mundwasser oder ein Gurgelmittel ist.

7. Parfümierende Zusammensetzung umfassend :

i) als parfümierenden Bestandteil, mindestens eine Verbindung der Formel (I) wie in Anspruch 1 oder 2 definiert;
ii) mindestens einen Bestandteil ausgewählt aus der Gruppe bestehend aus einem Parfümträger und einem Parfümgrundstoff; und
iii) wahlweise mindestens ein Parfümhilfsmittel.

8. Parfümierter Artikel umfassend :

i) als parfümierenden Bestandteil mindestens eine Verbindung der Formel (I) in Anspruch 1 oder 2 oder eine parfümierende Zusammensetzung wie in Anspruch 7 definiert; und
ii) einen nicht genießbaren Konsumentenproduktgrundstoff.

9. Parfümierter Artikel nach Anspruch 8 **dadurch gekennzeichnet, dass** der nicht genießbare Konsumentenproduktgrundstoff in Form eines festen oder flüssigen Detergens, eines Weichspülmittels, eines Parfüms, Eau de Cologne, einer After-Shave-Lotion, einer parfümierten Seife, eines Dusch- oder Badesalzes, -mousses -öls oder -gels, eines Hygieneprodukts, eines Haarpflegeprodukts, eines Schampoos, eines Körperpflegeprodukts, eines Deodorants, eines Antiperspirants, eines Lufterfrischungsmittels, einer kosmetischen Zubereitung, eines Textilerfrischers, Bügelwassers, Papiers, Wischtuchs oder eines Bleichmittels vorliegt.

10. Zusammensetzung umfassend :

    i) die Verbindung der Formel (I) und
    ii) mindestens eine weitere Verbindung, die organoleptische Eigenschaften nach Minze, Obst und/oder trigeminaler Art aufweist oder verleiht.

11. Zusammensetzung nach Anspruch 10 umfassend :

    i) die Verbindung der Formel (I),
    ii) Menthol, 2-Isopropyl-N-2,3-trimethylbutanamid oder ein Derivat von Menthol oder 2-Isopropyll-N-2,3-trimethylbutanamid und wahlweise
    iii) mindestens eine weitere Verbindung, die organoleptische Eigenschaften nach Minze, Obst und/oder trigeminaler Art ausgewählt aus der Gruppe bestehend aus kühlenden, prickelnden, scharfen und vermehrten Speichelfluss hervorrufenden Eigenschaften aufweist oder verleiht.

12. Zusammensetzung nach Anspruch 10, wobei die mindestens eine weitere Verbindung aus der Gruppe ausgewählt ist bestehend aus Menthylsuccinat, Menthyllactat, 3-(3'-P-Menthanyloxy)-1,2-propandiol und Menthonglycerinketal.

13. Zusammensetzung nach Anspruch 10, wobei die Verbindung der Formel (I) gemäß aus der Gruppe ausgewählt ist bestehend aus (3S,5R,6S,9R)-6-Isopropyl-3,9-dimethyl-1,4-dioxaspiro[4,5]decan-2-on, (3S,5S,6S,9R)-6-Isopropyl-3,9-dimethyl-1,4-dioxaspiro[4,5]decan-2-on und Mischungen der zwei hier aufgeführten Verbindungen.

14. Produkt umfassend die Zusammensetzung nach Anspruch 10, die aus der Gruppe ausgewählt ist bestehend aus einem Nahrungsmittelprodukt, einem Getränk, einem pharmazeutischen Produkt, einem Mundpflegeprodukt und einem Parfümerieprodukt.

## Revendications

1. Utilisation comme ingrédient parfumant ou aromatisant d'un composé de la formule

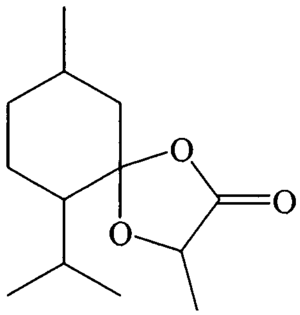

(I)

sous la forme de n'importe lequel de ses isomères ou d'un mélange de ceux-ci.

2. Utilisation suivant la revendication 1, **caractérisée en ce que** ledit composé est choisi dans le groupe constitué de (3S,6S,9R)-6-isopropyl-3,9-diméthyl-1,4-dioxaspiro[4.5]décan-2-one, de (3S,5S,6S,9R)-6-isopropyl-3,9-diméthyl-1,4-dioxaspiro[4.5]décan-2-one et de (3S,5R,6S,9R)-6-isopropyl-3,9-diméthyl-1,4-dioxaspiro[4.5]décan-2-one.

3. Composition aromatisante comprenant :

i) comme ingrédient aromatisant, au moins un composé de la formule (I), tel que défini dans la revendication 1 ou 2;
ii) au moins un ingrédient choisi dans le groupe constitué d'un support d'arôme et d'une base d'arôme; et
iii) éventuellement au moins un adjuvant d'arôme.

**4.** Composition suivant la revendication 3, **caractérisée en ce que** la base d'arôme comprend au moins un ingrédient aromatisant donnant des notes d'arôme de menthe et/ou de fruit.

**5.** Article aromatisé comprenant :

i) comme ingrédient aromatisant, au moins un composé de la formule (I), dans la revendication 1 ou 2, ou une composition aromatisante, telle que définie dans la revendication 3 ou 4; et
ii) une base de produit alimentaire ou une base de soin oral.

**6.** Article aromatisé suivant la revendication 5, **caractérisé en ce que** ladite base de produit alimentaire ou base de soin oral est une boisson, un jus de fruit, une boisson sans alcool, un thé froid, une soupe, une crème glacée, un sorbet, un bonbon, un bonbon à mâcher, une confiserie, un chewing-gum, un tabac à mâcher, une préparation pharmaceutique, un produit de soin dentaire, un gel de dentifrice, une pâte, un bain de bouche ou un gargarisme.

**7.** Composition parfumante comprenant :

i) comme ingrédient parfumant, au moins un composé de la formule (I), tel que défini dans la revendication 1 ou 2;
ii) au moins un ingrédient choisi dans le groupe constitué d'un support de parfumerie et d'une base de parfumerie; et
iii) éventuellement au moins un adjuvant de parfumerie.

**8.** Article parfumé comprenant :

i) comme ingrédient parfumant, au moins un composé de la formule (I), dans la revendication 1 ou 2, ou une composition parfumante, telle que définie dans la revendication 7; et
ii) une base de produit de consommation non agréable au palais.

**9.** Article parfumé suivant la revendication 8, **caractérisé en ce que** ladite base de produit de consommation non agréable au palais est sous la forme d'un détergent solide ou liquide, d'un assouplissant pour tissus, d'un parfum, d'une eau de Cologne, d'une lotion après-rasage, d'un savon parfumé, d'un sel, d'une mousse, d'une huile ou d'un gel de douche ou de bain, d'un produit d'hygiène, d'un produit de soin pour cheveux, d'un shampooing, d'un produit de soin pour le corps, d'un déodorant, d'un anti-transpirant, d'un désodorisant d'air ambiant, d'une préparation cosmétique, d'une eau de linge, d'une eau de repassage, d'un papier, d'une lingette ou d'un agent de blanchiment.

**10.** Composition comprenant :

i) le composé de la formule (I), et
ii) au moins un composé supplémentaire possédant ou donnant des propriétés de menthe, de fruit et/ou organoleptiques trigéminales.

**11.** Composition suivant la revendication 10, comprenant :

i) le composé de la formule (I),
ii) du menthol, du 2-isopropyl-N-2,3-triméthylbutanamide ou un dérivé de menthol ou de 2-isopropyl-N-2,3-triméthylbutanamide, et, éventuellement,
iii) au moins un composé supplémentaire possédant ou donnant des propriétés de menthe, de fruit et/ou organoleptiques trigéminales choisies dans le groupe constitué de propriétés rafraîchissantes, picotantes, piquantes et de salivation.

**12.** Composition suivant la revendication 10, dans laquelle le au moins un composé supplémentaire est choisi dans le groupe constitué de menthylsuccinate, de menthyllactate, de 3-(3'-P-menthanyloxy)-1,2-propanediol et menthoneglycérolcétal.

**13.** Composition suivant la revendication 10, dans laquelle le composé suivant la formule (I) est choisi dans le groupe constitué de (3S,5R,6S,9R)-6-isopropyl-3,9-diméthyl-1,4-dioxaspiro[4.5]décan-2-one, de (3S,5S,6S,9R)-6-isopropyl-3,9-diméthyl-1,4-dioxaspiro[4.5]décan-2-one et de mélanges des deux composés précédents.

**14.** Produit comprenant la composition suivant la revendication 10, qui est choisi dans le groupe constitué d'un produit alimentaire, d'une boisson, d'un produit pharmaceutique, d'un produit de soin oral et d'un produit de parfumerie.

Figure 1

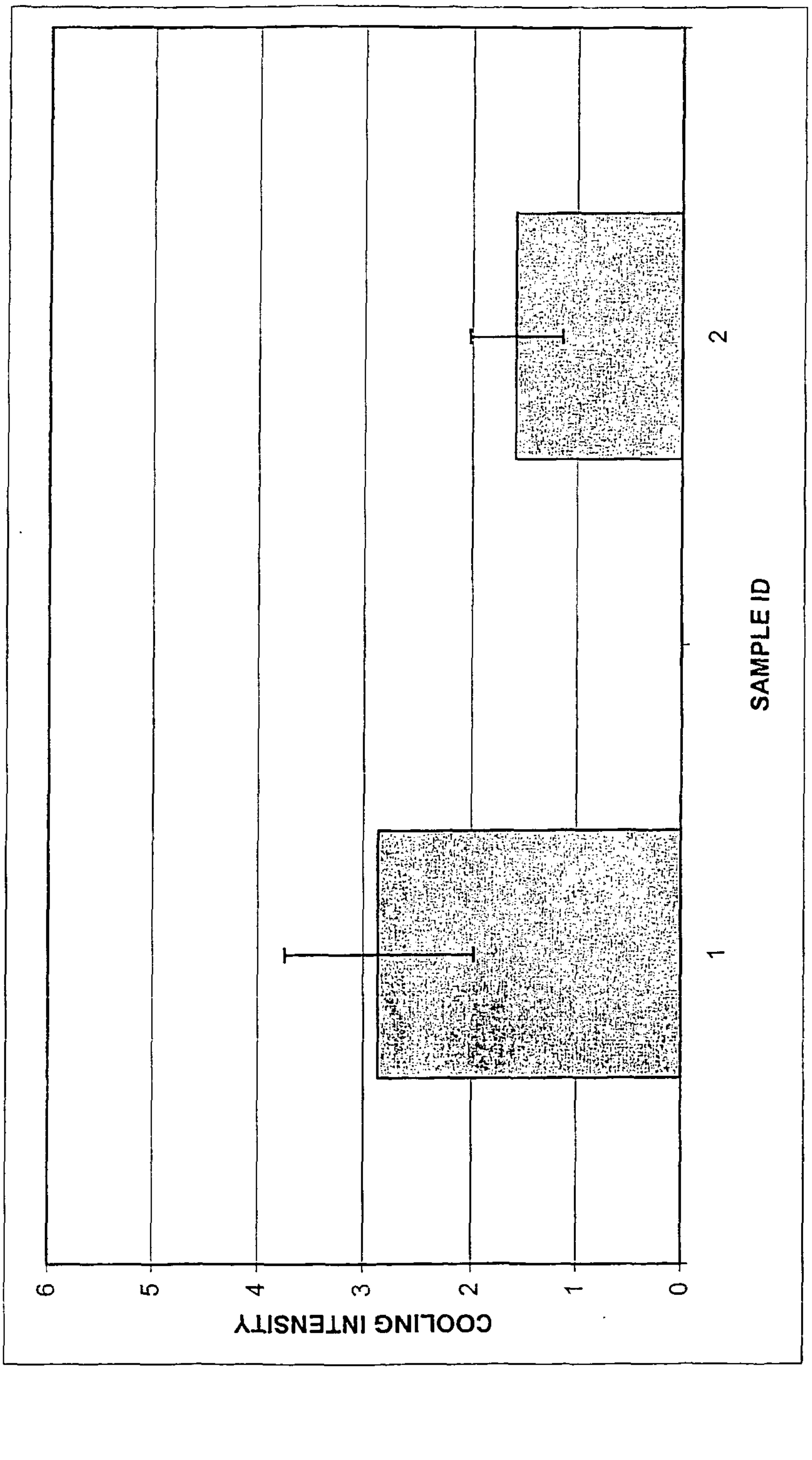

Figure 2

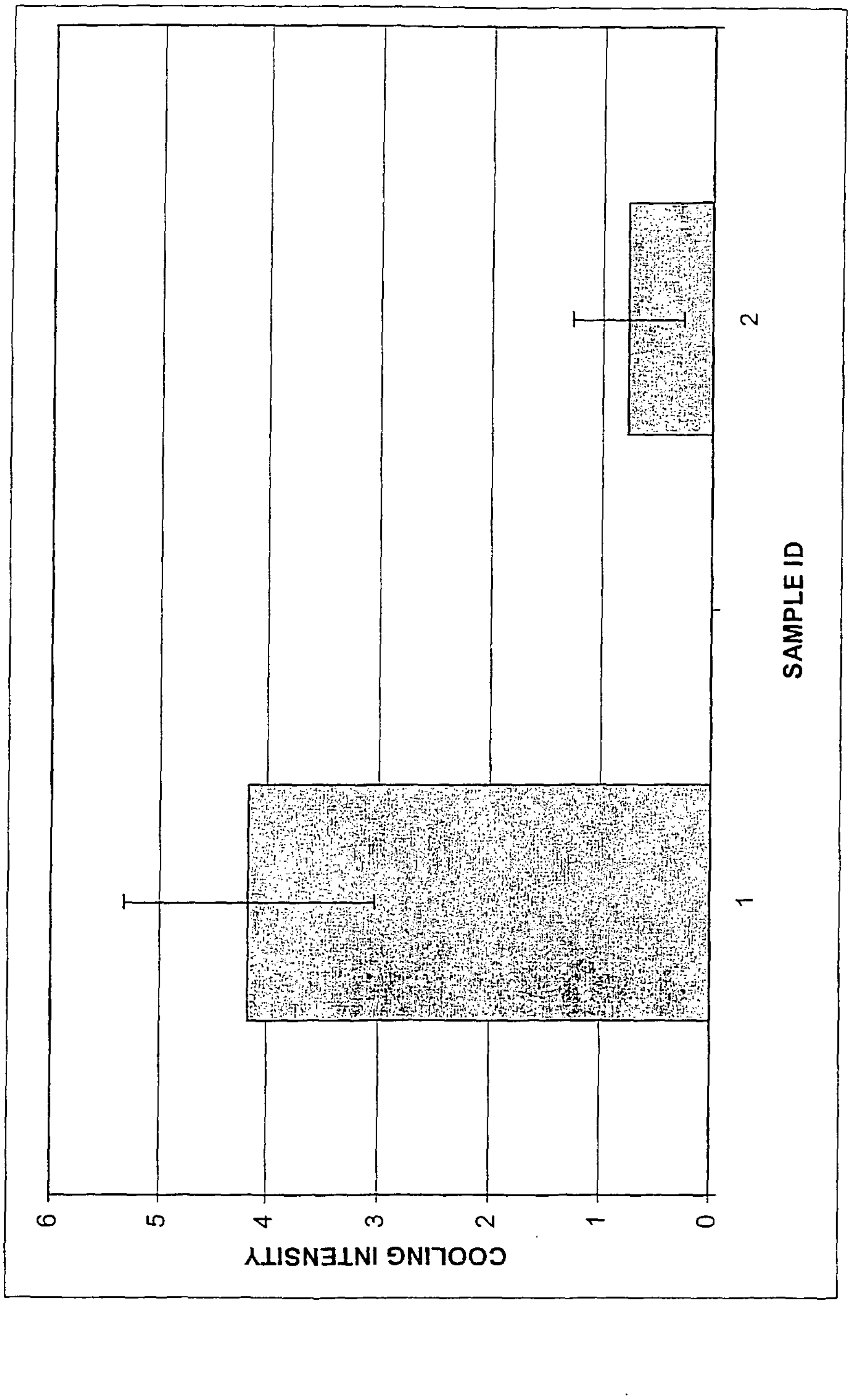

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5057239 A
- EP 485170 A
- US 4069345 A
- WO 9707771 A
- US 4459425 A
- EP 0485170 A
- JP 2001348308 A
- US 4060091 A
- DE 2503555
- US 6214788 B
- US 6359168 B


### Non-patent literature cited in the description


- **W.H.PEARSON et al.** *J.Org.Chem.,* 1987, vol. 52, 1355
- **H. SCHERZ.** Hydrokolloids : Stabilisatoren, Dickungs- und Gehermittel in Lebensmittel. Behr's VerlagGmbH & Co, 1996
- **H. R. WATSON.** Flavor: Its Chemical, Behavioural and Commercial Aspects Apt. oulder co©, 1977, 31-50
- **STEFFEN ARCTANDER.** Perfume and Flavor Chemicals. 1969